Europäisches Patentamt

European Patent Office

Office européen des brevets

(19)

(11) Publication number: **0 424 996 A2**

# EUROPEAN PATENT APPLICATION

(21) Application number: 90200206.2

(51) Int. Cl.⁵: **A23J 3/34**

(22) Date of filing: 29.01.90

(30) Priority: 24.10.89 IT 6791689

(43) Date of publication of application:
02.05.91 Bulletin 91/18

(84) Designated Contracting States:
AT BE CH DE DK ES FR GB GR LI LU NL SE

(71) Applicant: PANZANI PONTE LIEBIG S.p.A.
Via del Pastificio, 13
I-06087 Ponte S. Giovanni Perugia(IT)

(72) Inventor: Sumbati, Piero Jacques
Via Pitagora 23/B/3
I-06087 Ponte S. Giovanni (Perugia)(IT)
Inventor: Ferrero, Franco
Via Stradella 30
I-10147 Turin(IT)

(74) Representative: Robba, Eugenio et al
Studio "INTERPATENT" via Caboto 35
I-10129 Turin(IT)

(54) **Acid hydrolysis process of vegetable proteins for producing a proteinous extract with low content in 3-monochloropropandiol and 1,2-dichloropropanol in not detectable amount.**

(57) Acid hydrolysis process of vegetable proteins for producing a proteinous extract, where, due to particular operation conditions in the reactor, such as the reaction temperature of 95° - 120° C, pressure of 1 - 2 atm. in absolute value, time of reaction cycle of 6 - 48 h, we are able to obtain a product with 3-monochloropropandiol content lower than 0,6 ppm, and not detectable 1,2-dichloropropanol content.

EP 0 424 996 A2

# ACID HYDROLYSIS PROCESS OF VEGETABLE PROTEINS FOR PRODUCING A PROTEINOUS EXTRACT WITH LOW CONTENT IN 3-MONOCHLOROPROPANDIOL AND 1,2-DICHLOROPROPANOL IN NOT DETECTABLE AMOUNT

This invention relates to an acid hydrolysis process of vegetable proteins for producing a proteinous extract with low content in 3-monochloropropandiol and 1,2-dichloropropanol in not detectable amount.

The term vegetable proteins means deoiled meals of seeds of soybean, peanut, sunflower, grapestones, tomatoes, and so on, or gluten of cereals such as corn, wheat, etc.

Acid hydrolysis process of such vegetable proteins for producing a proteinous extract is longtime known and industrially used.

Such a process, generally, acts on said vegetable proteins by means of concentrated hydrochloric acid with a titer > 30%, hydrochloric acid/meals ratio of about 1 in weight, at following operational conditions:
- reaction temperature in the reactor:
$T^\circ C > 110^\circ C$;
- pressure in the reactor:
1,5 - 4 atm in absolute value;
- time of the reaction cycle in the reactor:
12-24h.

Subsequent steps of the convention process are in succession the following:
- neutralization,
- filtration and eventual decolorization,
- concentration,
- packaging and/or utilization.

Operational conditions above mentioned lead to the formation of chloroderivatives in high concentrations and in particular of:
3-monochloropropandiol > 300 ppm about
1,2-dichloropropanol > 0,05 ppm about.

The object of the process according to this invention is to obviate to the disadvantages of the prior art, just consisting of the above mentioned high concentration values for 3-monochloropropandiol and 1,2-dichloropropanol, by performing a process which, due to particular operational conditions, is able to drastically reduce the formation of chloroderivatives and especially that of the 3-monochloropropandiol and 1,2-dichloropropanol.

The process in question comprises treating a proteinous vegetable substance consisting of deoiled meals of seeds or glutens of cereals with hydrochloric acid and subjecting the obtained product, in subsequent steps to neutralization, filtration and possible decolorization, concentration, packaging and/or utilization, and is characterized in that:
- said hydrochloric acid is diluted hydrochloric acid, with titer ranging from 12 to 25%;
- the ration in weight of the hydrochloric acid to said proteinous vegetable substance ranges from 0,4 to 4;
- reaction temperature ranges from 950 to 120°C;
- pressure ranges from 1 to 2 atm in absolute value;
- time of the reaction cycle varies from 6 to 48 h according to treated material.

By the above mentioned operational conditions, the process in question drastically reduces the formation of chloroderivatives, as previously said, and the following concentration limits are obtained:
3-monochloropropandiol < 0,6 ppm
1,2-dichloropropanol: not detectable.

It is to point out the fact that the concentration value < 0,6 ppm for 3-monochloropropanol will not mean that said compound is actually present in the product obtained with a concentration lower than 0,6 ppm, but it means that at present more advanced analytical measuring instruments will not allow a detection lower than 0,6 ppm, and consequently said compound is likely absent.

Some examples of the process according to the invention will now be described.

Example 1: into the reactor provided with stirrer, 1,000 kg of 13% hydrochloric acid and 2,000 kg of proteinous meal are charged. The temperature is brought to 110°C and the pressure to 2 atm absolute.

The reaction is performed for 48 h while maintaining under constant stirring the mass. Then, it is cooled and neutralized with 30% sodium hydroxide.

After filtration, it is concentrated to give the end product in a thick doughy form.

Example 2: in the same reactor while maintaining under constant stirring, 6,000 kg of 24% hydrochloric acid and 2,000 kg of proteinous meal are charged. The temperature is brought to 96°C and the pressure to 1 atm absolute. The reaction is performed for 6 h. Then, it is proceeded as in the Example 1.

The obtained product is a proteinous extract with low content in 3-monochloropropandiol (< 0,6 ppm) and 1,2-dichloropropanol in not detectable amount.

It is evident that the temperature, pressure, reaction time values may change in relation to the treatment of the substances, always vegetable proteins.

It is evident that the invention is not restricted to the examples described, but several changes and further improvements can be introduced without departing from the scope of the invention.

## Claims

1. Acid hydrolysis process of vegetable proteins for producing a proteinous extract with low content in 3-monochloropropandiol and 1,2-dichloropropanol in not detectable amount, comprising treating a proteinous vegetable substance consisting of deoiled meals of seeds or glutens of cereals with hydrochloric acid and subjecting the obtained product, in subsequent steps, to neutralization, filtration and possible decolorization, concentration, packaging and/or utilization, characterized in that:
- said hydrochloric acid is diluted hydrochloric acid, with titer ranging from 12 to 25%;
- the ration in weight of the hydrochloric acid to said proteinous vegetable substance ranges from 0,4 to 4;
- reaction temperature ranges from 95° to 120° C;
- pressure ranges from 1 to 2 atm in absolute value;
- time of the reaction cycle varies from 6 to 48 h according to treated material.

2. Acid hydrolysis process of vegetable proteins according to claim 1, characterized in that the product obtained by said process shows the following concentrations of chloroderivatives:
3-monochloropropandiol < 0,6 ppm
1,2-dichloropropanol: not detectable.

3. Acid hydrolysis process of vegetable proteins according to claims 1 and 2, characterized in that 3-monochloropropandiol, shown present by the present analytical measuring instruments with a concentration lower than 0,6 ppm, is absent.